# EUROPÄISCHE PATENTSCHRIFT

(11) **EP 2 303 655 B1**
(45) Veröffentlichungstag und Bekanntmachung des Hinweises auf die Patenterteilung: **28.12.2011**
(21) Anmeldenummer: 09780685.5
(22) Anmeldetag: 16.07.2009
(51) Int. Cl.: B60T 8/40, B60T 13/12, B60T 13/16, B60T 13/66, B60T 13/74

(54) **BREMSANLAGE FÜR KRAFTFAHRZEUGE**
BRAKE SYSTEM FOR MOTOR VEHICLES
SYSTÈME DE FREINAGE POUR VÉHICULES À MOTEUR

(30) Priorität: 18.07.2008 DE 102008033785; 15.07.2009 DE 102009033499
(43) Veröffentlichungstag der Anmeldung: 06.04.2011
(73) Patentinhaber: Continental Teves AG & Co. oHG, 60488 Frankfurt (DE)
(72) Erfinder: DINKEL, Dieter, 65824 Schwalbach (DE); FEIGEL, Hans-Jörg, Rosbach 61191 (DE)
(86) Internationale Anmeldenummer: PCT/EP2009/059124
(87) Internationale Veröffentlichungsnummer: WO 2010/007119

(56) Entgegenhaltungen:
- EP-A- 1 070 006
- WO-A-2004/080772
- DE-A1- 10 258 266
- DE-A1-102004 025 638
- DE-A1-102006 040 424

## Beschreibung

Die vorliegende Erfindung betrifft eine Bremsanlage für Kraftfahrzeuge mit den im Oberbegriff des Anspruchs 1 aufgeführten Merkmalen.

Eine derartige Bremsanlage ist aus der internationalen Patentanmeldung WO 2004/080772 A1 bekannt. Das elastische Element der Simulatoreinrichtung ist als eine Druckfeder ausgebildet, die wirkungsmäßig zwischen dem Eingangskraftelement und dem Rückhaltekolben angeordnet ist. Demzufolge muss der Rückhaltekolben in der (Normal-)Betriebsart "Brake-by-wire" an einem gehäusefesten Anschlag gehalten werden, um der erwähnten Druckfeder ein stabiles Widerlager zur Verfügung zu stellen. Bei einer schnellen Pedalbetätigung tritt bei der vorbekannten Bremsanlage das Problem auf, dass die elektrisch steuerbare Druckbereitstellungseinrichtung, die als ein Motor-Pumpen-Aggregat ausgeführt ist, den erforderlichen Rückhaltedruck nicht mit der gleichen Dynamik aufbauen kann, so dass eine temporäre Bewegung des Rückhaltekolbens von seinem Anschlag weg stattfinden kann. Diese Bewegung hat ein für den Fahrzeugführer unangenehmes Bremspedalgefühl zur Folge. Dokument DE 10 2006 040 424 A1 veröffentlicht auch eine derartige Bremsanlage.

Es ist daher Aufgabe der vorliegenden Erfindung, eine Verbesserung des Pedalgefühls bei einer Bremsanlage der eingangs genannten Gattung, insbesondere bei "Brake-by-wire"-Bremsungen, sicher zu stellen. Dabei soll das temporäre Durchtauchen des Rückhaltekolbens bei dynamischer Betätigung weitgehend verhindert werden.

Diese Aufgabe wird bei einer Bremsanlage gemäß der vorliegenden Erfindung dadurch gelöst, dass der Rückhaltekolben als ein Stufenkolben ausgebildet ist, dessen Ringfläche einen absperrbaren hydraulischen Raum begrenzt, wobei eine Druckwirkung im Raum einer Kraft entspricht, die auf den Rückhaltekolben entgegen der Betätigungsrichtung wirkt.

Bevorzugt ist der hydraulische Raum über ein Absperrventil mit dem Druckmittelvorratsbehälter verbindbar.

Bevorzugt ist die elektrisch steuerbare Druckbereitstellungseinrichtung mit einem der Hauptbremszylinder-Druckräume direkt verbindbar. Besonders bevorzugt ist in der Verbindung zwischen der Druckbereitstellungseinrichtung mit dem Hauptbremszylinder-Druckraum ein elektromagnetisch betätigbares, stromlos geschlossenes (SG-) 2/2-Wegeventil eingefügt.

Die elektrisch steuerbare Druckbereitstellungseinrichtung der erfindungsgemäßen Bremsanlage ist bevorzugt als eine hydraulische Zylinder-Kolben-Anordnung ausgebildet, deren Kolben mittels eines Elektromotors antreibbar ist.

Gemäß einer bevorzugten Ausführungsform der erfindungsgemä-βen Bremsanlage ist ein Hochdruckspeicher vorgesehen, der von der elektrisch steuerbaren Druckbereitstellungseinrichtung aufladbar ist. Vorteilhafterweise ist in der hydraulischen Verbindung zwischen dem Hochdruckspeicher und der elektrisch steuerbaren Druckbereitstellungseinrichtung ein Absperrventil (auch als Speicherladeventil bezeichnet) eingefügt.

Zwischen dem Hauptbremszylinder und den Radbremsen ist bevorzugt ein hydraulisches Bremsdruckmodulationsaggregat eingefügt, welches bremskreisindividuelle oder radselektive Bremsvorgänge ermöglicht.

Das Bremsdruckmodulationsaggregat weist vorteilhafterweise Druckregelventile zum Durchführen eines Bremsvorgangs nach dem sog. Multiplexprinzip auf.

Gemäß einer Weiterbildung der erfindungsgemäßen Bremsanlage sind sämtliche elektromagnetisch betätigbaren 2/2-Wegeventile, die Drucksensoren, die Druckbereitstellungseinrichtung sowie ein die Rotorlage eines einen Bestandteil der Druckbereitstellungseinrichtung bildenden Elektromotors erfassender Rotorlagensensor in einem hydraulischen Ventilblock integriert.

Bevorzugt beinhaltet der Ventilblock die Pedalentkopplungseinheit mit ihrem Gehäuse sowie die Simulatoreinrichtung und ist an einer Spritzwand des Kraftfahrzeuges befestigbar.

Ebenso ist es bevorzugt, dass im Ventilblock die Sensoreinrichtung zum Erfassen des Fahrerverzögerungswunsches integriert ist und mit der elektronischen Steuer- und Regeleinheit ohne externe Kabel verbunden ist.

Weitere vorteilhafte Weiterbildungen der erfindungsgemäßen Bremsanlage sind in den Unteransprüchen 2 bis 12 aufgeführt, während diverse Verfahren zu deren Betrieb Gegenstand der Unteransprüche 13 bis 20 darstellen.

Die Erfindung wird in der nachfolgenden Beschreibung an zwei Ausführungsbeispielen im Zusammenhang mit den beiliegenden Zeichnungen näher erläutert. In den Zeichnungen zeigen:
Fig. 1 eine erste Ausführung einer Bremsanlage gemäß der vorliegenden Erfindung,
Fig. 2 eine zweite Ausführung einer Bremsanlage gemäß der vorliegenden Erfindung,
Fig. 3 eine vereinfachte Darstellung einer gegenüber Fig. 1 modifizierten erfindungsgemäßen Bremsanlage in unbetätigtem Zustand, und
Fig. 4 bis 11 diverse Betriebsmodi der in Fig. 1 und 2 dargestellten Bremsanlagen nach der Erfindung.

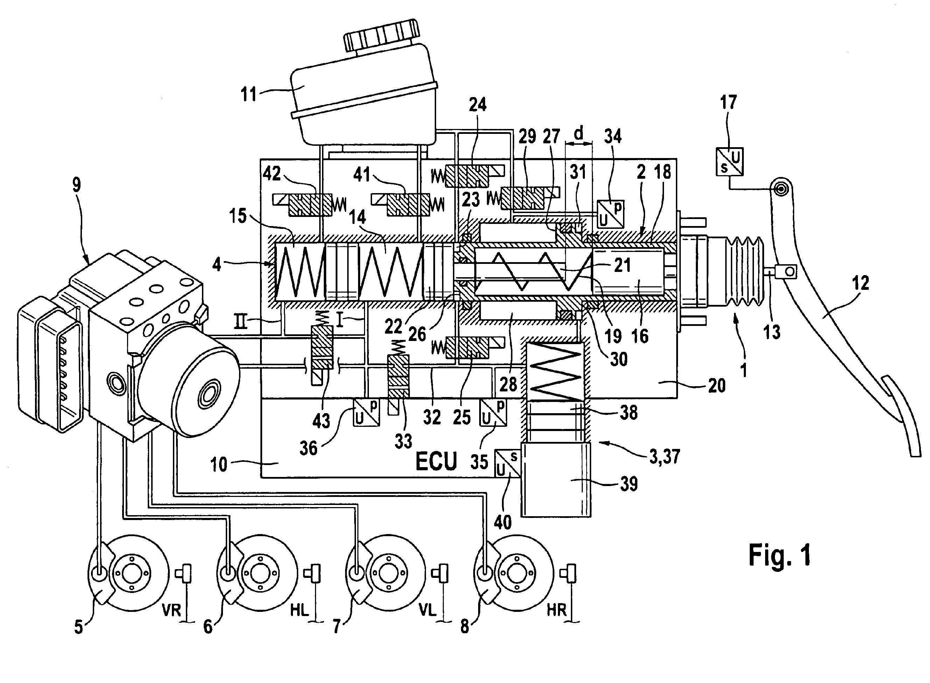

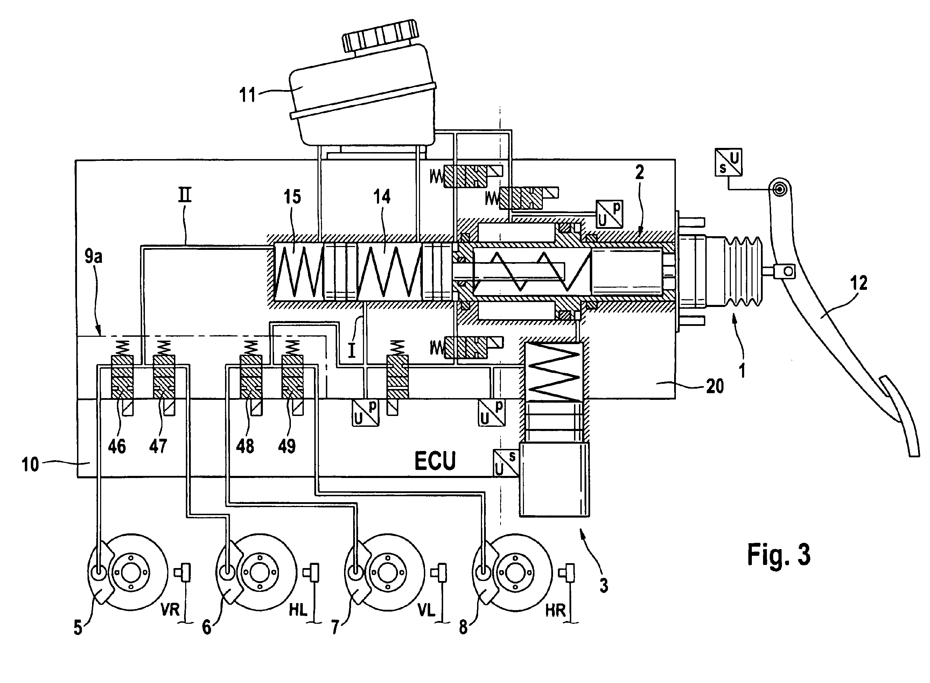

Die in Fig. 1 dargestellte erfindungsgemäße Bremsanlage besteht im Wesentlichen aus einer Betätigungseinrichtung 1, einer Pedalentkopplungseinheit 2, einer elektrisch steuerbaren Druckbereitstellungseinrichtung 3, wobei die Betätigungseinrichtung 1, und die Druckbereitstellungseinrichtung 3 einen Bremskraftverstärker bilden, sowie einem dem Bremskraftverstärker wirkungsmäßig nachgeschalteten Hauptbremszylinder bzw. Tandemhauptzylinder 4, dessen Druckräume 14, 15 mittels bekannter, nicht dargestellter sog. Schnüffellöcher mit den unter Atmosphärendruck stehenden Kammern eines Druckmittelvorratsbehälters 11 verbindbar sind. Außerdem sind die erwähnten Druckräume 14, 15 mit dem Druckmittelvorratsbehälter 11 über elektromagnetisch betätigbare, vorzugsweise stromlos offene (SO-) 2/2-Wegeventile 41, 42 verbunden, derer Aufgabe später erläutert wird. Andererseits sind an die Druckräume 14, 15 Radbremskreise I, II angeschlossen, die unter Zwischenschaltung eines Hydroaggregats bzw. eines steuerbaren Radbremsdruckmodulationsmoduls 9 die Radbremsen 5 - 8 eines Kraftfahrzeuges mit hydraulischem Druckmittel versorgen. Außerdem sind die Radbremskreise I, II mittels einer hydraulischen Verbindung verbindbar, in der ein elektromagnetisch betätigbares, vorzugsweise stromlos geschlossenes (SG-) 2/2-Wegeventil 43 eingefügt ist, dessen Funktion ebenfalls später erläutert wird. Das Radbremsdruckmodulationsmodul 9 weist den Radbremsen 5 - 8 vorgeschaltete, nicht näher bezeichnete Druckmodulationsventile auf, die beispielsweise ABS- und/oder ESP-Bremsvorgänge ermöglichen. Dabei sind für die Durchführung der ABS-Bremsungen acht und für die Durchführung der ESP-Bremsungen zwölf Druckmodulationsventile erforderlich. Selbstverständlich kann alternativ zu dem dargestellten auch ein wesentlich einfacheres Radbremsdruckmodulationsmodul mit vier Druckmodulationsventilen verwendet werden, das eine Radbremsdruckmodulation nach dem sog. Multiplexprinzip ermöglicht, das dem Fachmann bekannt ist (S. insbesondere Fig. 3). Außerdem weist die gezeigte Bremsanlage eine lediglich schematisch angedeutete elektronische Steuer- und Regeleinheit 10 auf. Die Betätigungseinrichtung 1, die in einem Gehäuse 20 angeordnet ist, in dem auch der Tandemhauptzylinder 4 integriert ist, ist über ein Bremspedal 12 ansteuerbar, das über eine Betätigungsstange 13 mit einem Eingangskraftelement 16 wirkungsmäßig verbunden ist. Der Betätigungsweg des Bremspedals 12 wird mittels einer Sensoreinrichtung 17 indirekt über den Drehwinkel des Bremspedals 12 erfasst. Die vorhin erwähnte Pedalentkopplungseinheit 2 weist im Wesentlichen einen Rückhaltekolben 18 auf, in dessen Innerem das Eingangskraftelement 16 verschiebbar geführt wird und sich an einer Druckfeder 19 abstützt, die eine Simulationseinrichtung darstellt, die in der Betriebsart "Brake-by-wire" dem Fahrzeugführer ein angenehmes Pedalgefühl vermittelt. Eine dem Hauptbremszylinder 4 zugewandte Stirnfläche des Rückhaltekolbens 18, der im gezeigten Beispiel als ein Stufenkolben ausgebildet ist, ist als eine erste Ringfläche 26 ausgebildet, dient als Führung eines axialen Fortsatzes 21 eines Primärkolbens 22 und begrenzt mit diesem eine erste hydraulische Kammer 23, die einerseits über ein elektromagnetisch betätigbares, vorzugsweise stromlos offenes (SO-)2/2-Wegeventil 24 und andererseits über ein zweites, ebenfalls elektromagnetisch betätigbares, stromlos offenes (SO-)2/2-Wegeventil 25 mit der elektrisch steuerbaren Druckbereitstellungseinrichtung 3 verbunden ist. Der axiale Fortsatz 21 befindet sich in dem in Fig. 1 gezeigten Ruhezustand in einem axialen Abstand vom Eingangskraftelement 16, der mit d bezeichnet wird.

Fig. 1 ist weiterhin zu entnehmen, dass eine zweite Ringfläche 27 des Rückhaltekolbens 18 im Gehäuse 20 eine absperrbare hydraulische zweite Kammer 28 begrenzt, die über ein elektromagnetisch betätigbares, stromlos offenes (SO-)2/2-Wegeventil 29 mit dem Druckmittelvorratsbehälter 11 verbunden ist. Der in der zweiten Kammer 28 vorliegende hydraulische Druck wird mittels eines ersten Drucksensors erfasst, der mit dem Bezugszeichen 34 versehen ist. Schließlich begrenzt eine dritte Ringfläche 30 des Rückhaltekolbens 18 im Gehäuse 20 eine dritte hydraulische Kammer 31, die mit dem von der elektrisch steuerbaren Druckbereitstellungseinrichtung 3 gelieferten Druck beaufschlagbar ist. Dabei stellt das Verhältnis der dritten (30) zur ersten Ringfläche 26 des Rückhaltekolbens 18 eine Druckübersetzung dar, die es ermöglicht, bei einem gegebenen Wert des von der elektrisch steuerbaren Druckbereitstellungseinrichtung 3 gelieferten Druckes einen höheren Druckwert im Hauptbremszylinder (4) zu erzeugen. Schließlich verbindet eine mittels eines vierten elektromagnetisch betätigbaren, 2/2-Wegeventils 33 absperrbare Leitung 32 den Ausgang der elektrisch steuerbaren Druckbereitstellungseinrichtung 3 mit dem ersten bzw. Primärdruckraum 14 des Hauptbremszylinders 4. Dabei wird der von der Druckbereitstellungseinrichtung 3 gelieferte Druck mittels eines zweiten Drucksensors 35 erfasst, während der Wert des im Primärdruckraum 14 eingesteuerten hydraulischen Druckes von einem dritten Drucksensor 36 ermittelt werden kann.

Schließlich ist Fig. 1 zu entnehmen, dass die elektrisch steuerbare Druckbereitstellungseinrichtung 3 als ein elektrohydraulischer Aktuator ausgebildet ist, der im Wesentlichen aus einer hydraulischen Zylinder-Kolben-Anordnung 37 sowie einem den Kolben 38 der genannten Anordnung 37, vorzugsweise unter Zwischenschaltung eines nicht dargestellten sog. Rot-Trans-Getriebes, antreibenden Elektromotor 39 besteht. Ein lediglich schematisch angedeuteter Weg- oder Lagesensor 40 erfasst den Betätigungsweg des Kolbens 38 bzw. die Winkellage des nicht dargestellten Rotors des Elektromotors 39.

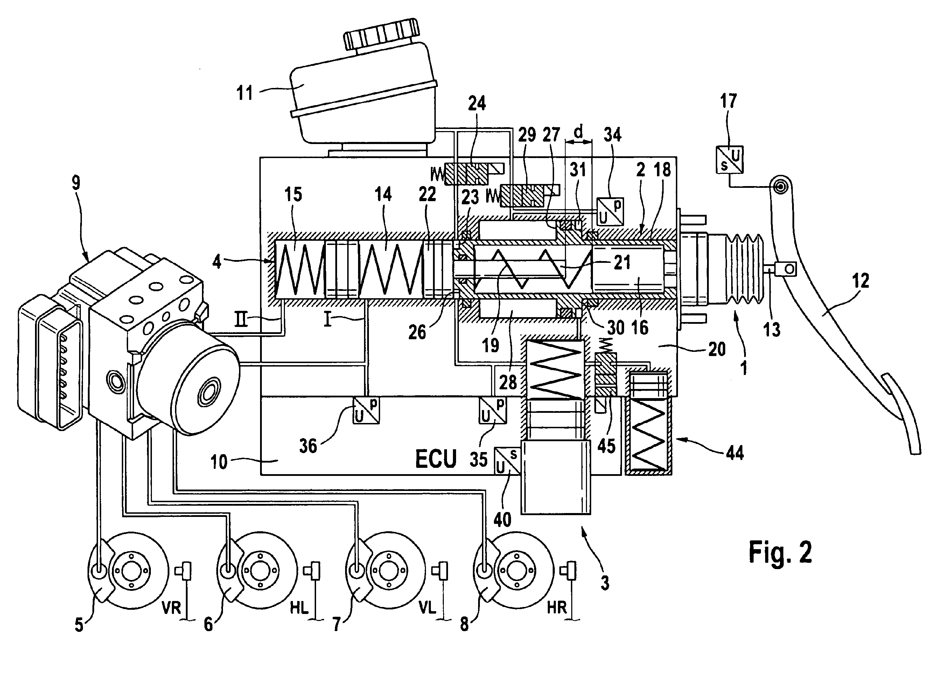

Der Aufbau der in Fig. 2 dargestellten zweiten Variante des erfindungsgemäßen Bremssystems entspricht weitgehend der in Fig. 1 gezeigten ersten Ausführung, wobei für die gleichen Bestandteile die gleichen Bezugszeichen verwendet werden. Um die Dynamik des in Fig. 1 gezeigten erfindungsgemäßen Bremssystems, insbesondere bei Druckaufbauvorgängen, zu erhöhen, ist ein Hochdruckspeicher 44 vorgesehen, der, vorzugsweise unter Zwischenschaltung eines Absperr- bzw. Speicherladeventils 45, von der im Zusammenhang mit Fig. 1 beschriebenen, elektrisch steuerbaren Druckbereitstellungseinrichtung 3 ladbar ist.

Die in den Fig. 1 und 2 gezeigten Bremssysteme sind jeweils im unbetätigten Zustand dargestellt. Der dargestellte Zustand der einzelnen Komponenten der erfindungsgemäßen Bremssysteme, ausgenommen der Positionen von Bremspedal 12, Eingangskraftelement 16, der Länge der Simulatorfeder 19 und des Schaltzustands der Ventile 24 und 29 entspricht gleichzeitig einem Bremsbetrieb bei einem Hybridfahrzeug, in dem die entsprechend der Bremspedalstellung erforderliche Abbremsung durch einen Generatorbetrieb des im Fahrzeug vorhandenen Antriebsmotors (rekuperative Bremsung) erfolgt und kein hydraulischer Bremsdruckaufbau erforderlich ist.

Bei der in Fig. 3 gezeigten, gegenüber der in Fig. 1 dargestellten Bremsanlage vereinfachten Ausführung ist ein lediglich schematisch angedeutetes Radbremsdruckmodulationsmodul 9a in dem vorhin erwähnten Gehäuse 20 integriert und besteht im Wesentlichen aus vier Druckmodulationsventilen 46, 47, 48, 49, die einzeln den Radbremsen 5, 6, 7, 8 zugeordnet sind und für die Durchführung von Druckregelvorgängen nach dem sog. Multiplexprinzip geeignet sind. Ein Multiplexbetrieb bei Bremsanlagen ist dem Fachmann bekannt und braucht im vorliegenden Zusammenhang nicht näher erläutert zu werden.

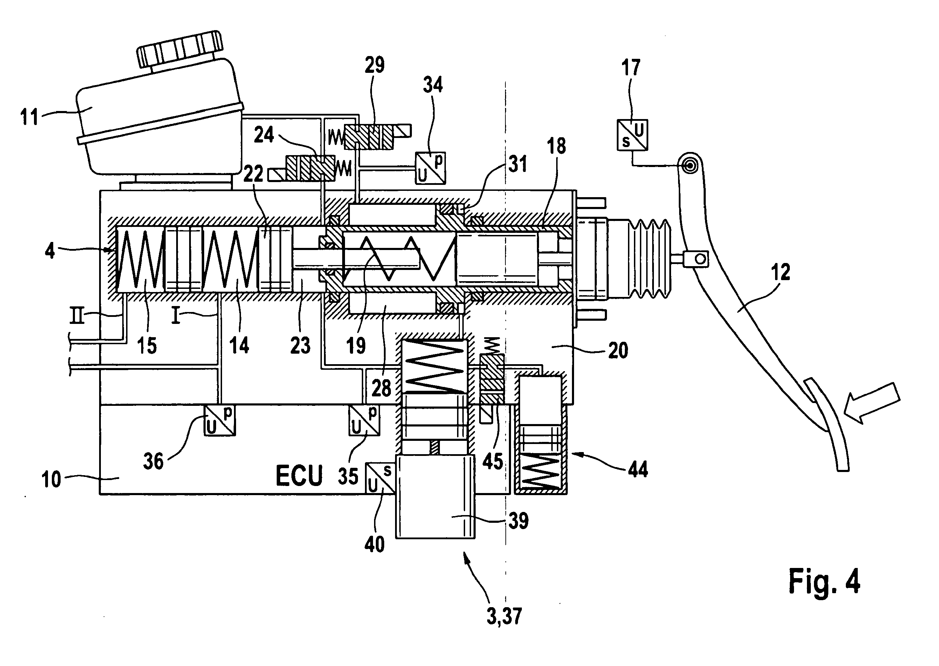

Bei dem in Fig. 4 dargestellten Normalbremsmodus, der der sog. "Brake-by-wire"-Betriebsart entspricht, werden bei einem Signal des Bremspedalwegsensors 17 die im Zusammenhang mit Fig. 1 bzw. 2 erwähnten, stromlos offenen 2/2-Wegeventile 24, 29 bestromt, so dass die hydraulischen Verbindungen der ersten (23) sowie der zweiten Kammer 28 mit dem Druckmittelvorratsbehälter 11 abgesperrt werden. Demzufolge ist bei einer anschließenden Aktivierung der elektrisch steuerbaren Druckbereitstellungseinrichtung 3 bzw. 37 keine Bewegung des Rückhaltekolbens 18 möglich. Über das in Fig. 4 nicht gezeigte (SO-) 2/2-Wegeventil 25 (s. Fig. 1) strömt das von der Druckbereitstellungseinrichtung 3 bzw. 37 verdrängte Druckmittelvolumen in die erste hydraulische Kammer 23 und bewirkt eine Bewegung der Hauptbremszylinderkolben 22, - nach links und somit eine Druckerhöhung in den Hauptbremszylinder-Druckräumen 14, 15 bzw. in den Kraftfahrzeug-Radbremsen 5 - 8(in Fig. 4 nicht dargestellt). Dabei werden die Werte des in der ersten Kammer 23, der zweiten Kammer 28 sowie im Primärdruckraum 14 des Hauptbremszylinders 4 eingesteuerten Druckes durch die Drucksensoren 35, 34 und 36 erfasst und der elektronischen Steuer- und Regeleinheit 10 gemeldet. Bei der Bremspedalbetätigung wird die Simulatorfeder 19 komprimiert, wodurch dem Fahrzeugführer ein angenehmes Pedalgefühl vermittelt wird. Denkbar ist auch ein nicht dargestellter Betriebsmodus, in dem die erste hydraulische Kammer 23 abgesperrt wird, die Verbindung der zweiten Kammer 28 mit dem Druckmittelvorratsbehälter 11 freigegeben wird und die dritte Kammer 31 mit dem von der Druckbereitstellungseinrichtung 3 gelieferten Druck beaufschlagt wird, so dass eine Druckerhöhung im Hauptbremszylinder 4 erfolgt. In diesem Betriebsmodus kann auch ein zusätzliches Druckmittelvolumen für den Primärdruckraum 14 aus dem Bereich der Druckbereitstellungseinrichtung 3 (ohne Verstärkungsfaktor) zur Verfügung gestellt werden.

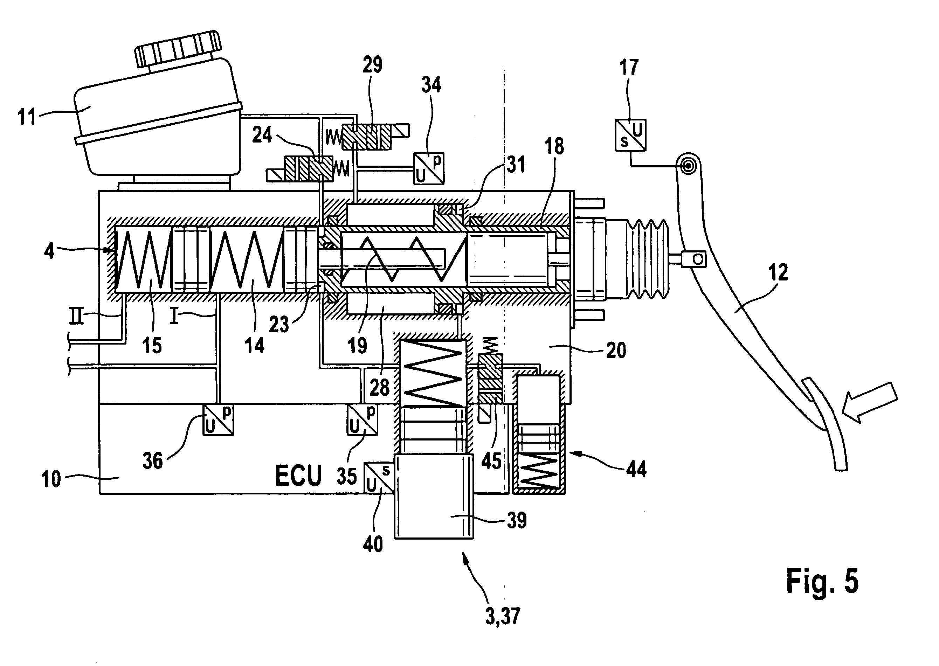

Ein sog. Hybridbetrieb, bei dem das Kraftfahrzeug ausschließlich von dem Antriebs-(Elektro-)Motor abgebremst wird und bei dem kein hydraulischer Bremsdruckaufbau erforderlich ist, wird in Fig. 5 dargestellt. Erscheint am Ausgang des den Fahrerverzögerungswunsch erfassenden Weg- oder Drehwinkelsensors 17 ein Signal, so werden die vorhin erwähnten elektromagnetisch schaltbaren, stromlos offenen (SO-)2/2-Wegeventile 24, 29 in ihre Schließstellung umgeschaltet, wodurch die hydraulischen Verbindungen der beiden hydraulischen Kammern 23, 28 mit dem Druckmittelvorratsbehälter 11 abgesperrt werden. Dabei stellt der in seiner blockierten Stellung stehende Rückhaltekolben 18 eine feste Abstützung der Simulatorfeder 19 dar, die durch die am Bremspedal 12 eingeleitete Bremskraft entsprechend komprimiert wird (Abstand d wird kleiner).

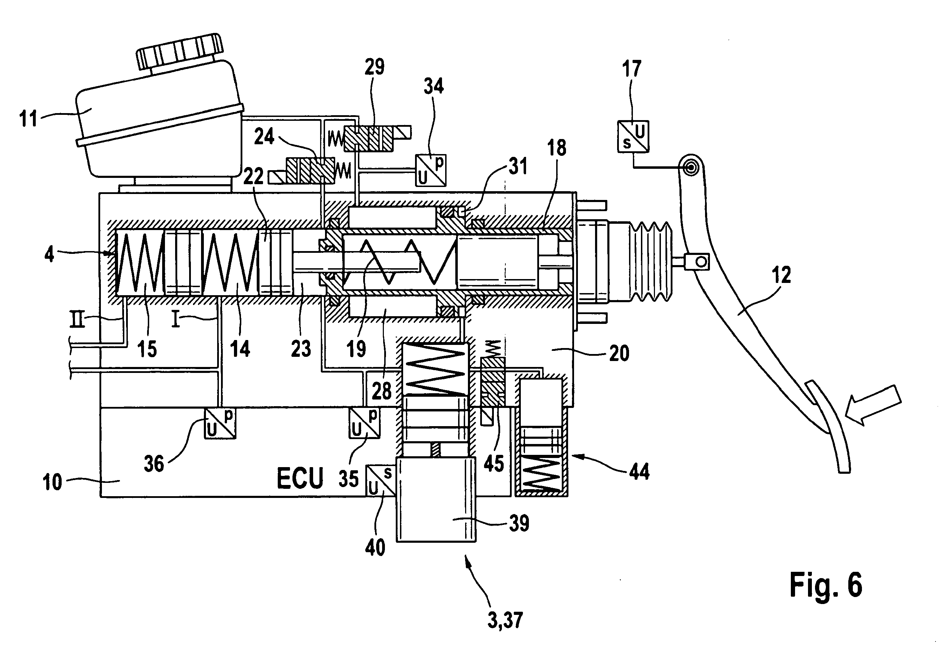

Ein hoch dynamischer Bremsvorgang ist in Fig. 6 dargestellt.

Beim Erscheinen eines Signals am Ausgang des den Fahrerverzögerungswunsch erfassenden Weg- oder Drehwinkelsensors 17, das eine schnelle Betätigung des Bremspedals 12 repräsentiert, werden die (SO-)2/2-Wegeventile 24, 29 zum Zweck der Absperrung der beiden hydraulischen Kammern 23, 28 in ihre Schließstellung umgeschaltet. Gleichzeitig mit der Aktivierung der elektrisch steuerbaren Druckbereitstellungseinrichtung 3 wird das im Zusammenhang mit Fig. 2 erwähnte Speicherlade- bzw. Absperrventil 45 in seine offene Schaltstellung umgeschaltet, so dass die erste hydraulische Kammer 23 zusätzlich zu dem von der Druckbereitstellungseinrichtung 3 zur Verfügung gestellten Druckmittelmenge mit dem im Hochdruckspeicher 44 unter hohem Druck stehenden Druckmittel beaufschlagt wird. Der beschriebene Vorgang hat einen schnellen Druckaufbau in der ersten Kammer 23 und somit im Hauptbremszylinder 4 zur Folge. Der in der ersten Kammer 23 eingesteuerte Druckwert wird vom Drucksensor 35 erfasst, während der im ersten Druckraum 14 herrschende Druck vom zweiten Drucksensor 36 ermittelt wird.

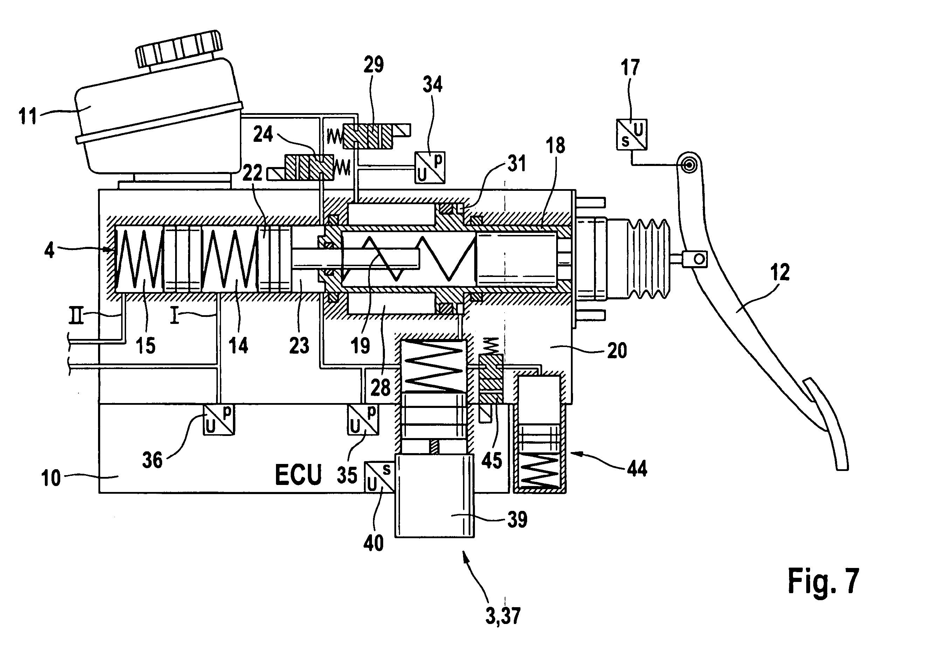

Ein autonomer Druckaufbau für Assistenzfunktionen, bei dem sämtliche hydraulischen Komponenten die im Zusammenhang mit Fig. 4 beschriebenen Schaltstellungen annehmen, wird in Fig. 7 dargestellt. Die Ansteuerung der elektrisch steuerbaren Druckbereitstellungseinrichtung 3 erfolgt ohne Fahrerbetätigung des Bremspedals 12 durch Ansteuersignale der elektronischen Steuer- und Regeleinheit 10 entsprechend Anforderungen eines im Kraftfahrzeug vorhandenen Assistenzsystems, beispielsweise eines elektronischen Abstandsregelungssystems.

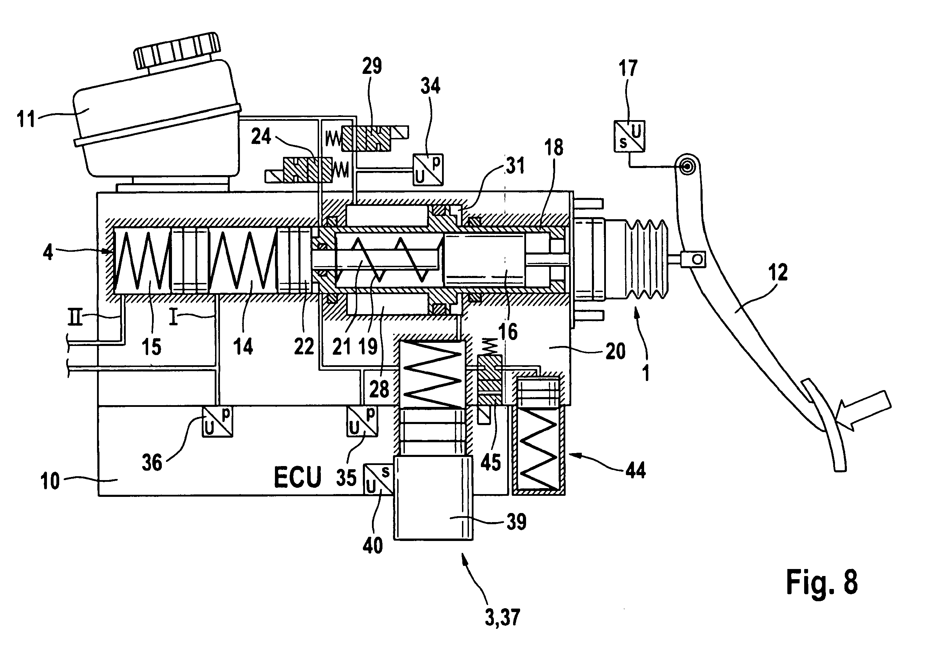

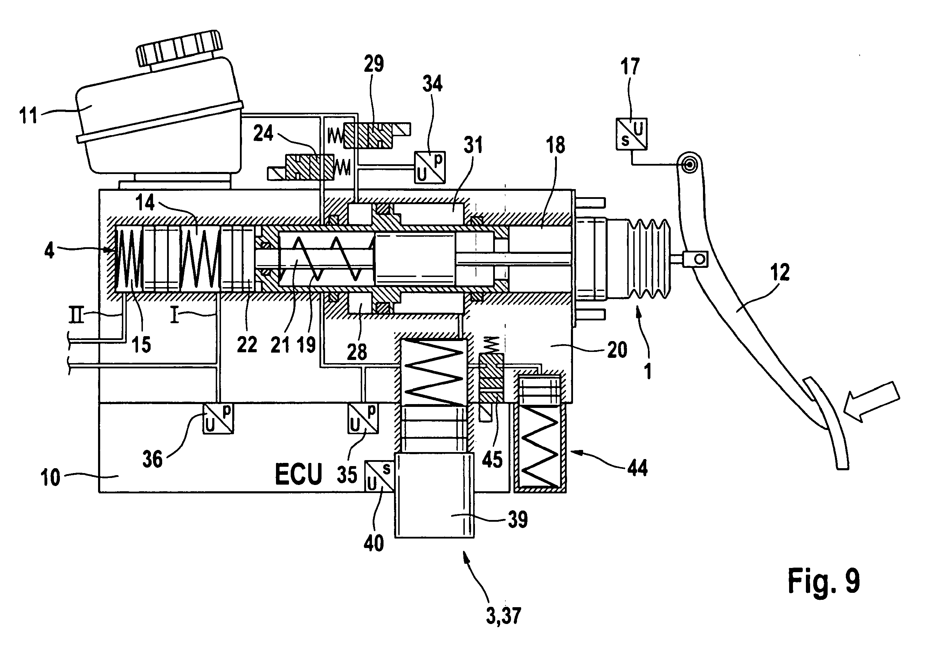

Fig. 8 und 9 zeigen jeweils einen Zustand der erfindungsgemäßen Bremsanlage, der auf eine fehlende Stromversorgung zurück zu führen ist und der als eine Rückfallebene bezeichnet wird. In dem in Fig. 8 gezeigten Zustand erfolgt eine Übertragung der am Bremspedal 12 vom Fahrer eingeleiteten Betätigungskraft über das Eingangskraftelement 16, die komprimierte Simulatorfeder 19 sowie den Rückhaltekolben 18 auf den ersten bzw. Primärkolben 22 des Hauptbremszylinders 4. Der vom Bremspedal 12 zurück gelegte Betätigungsweg entspricht der Summe eines ersten Weganteils, der auf die Druckmittelvolumenaufnahme des dem Hauptbremszylinder 4 nachgeschalteten Bremssystems zurückzuführen ist, und eines dem Komprimieren der Simulatorfeder 19 entsprechenden Weganteils. Bei der Wirkung einer größeren Bremspedalkraft, die eine stärkere Betätigung der Betätigungseinrichtung 1 zur Folge hat (siehe Fig. 9), entspricht der weitere Bremspedalweg gegenüber dem in Fig. 8 gezeigten Zustand der Druckmittelvolumenaufnahme des dem Hauptbremszylinder 4 nachgeschalteten Bremssystems, da die Betätigung des Hauptbremszylinders 4 durch eine direkte mechanische Übertragung der Eingangskraft vom Eingangskraftelement 16 auf den axialen Fortsatz 21 des Hauptzylinderkolbens 22 erfolgt.

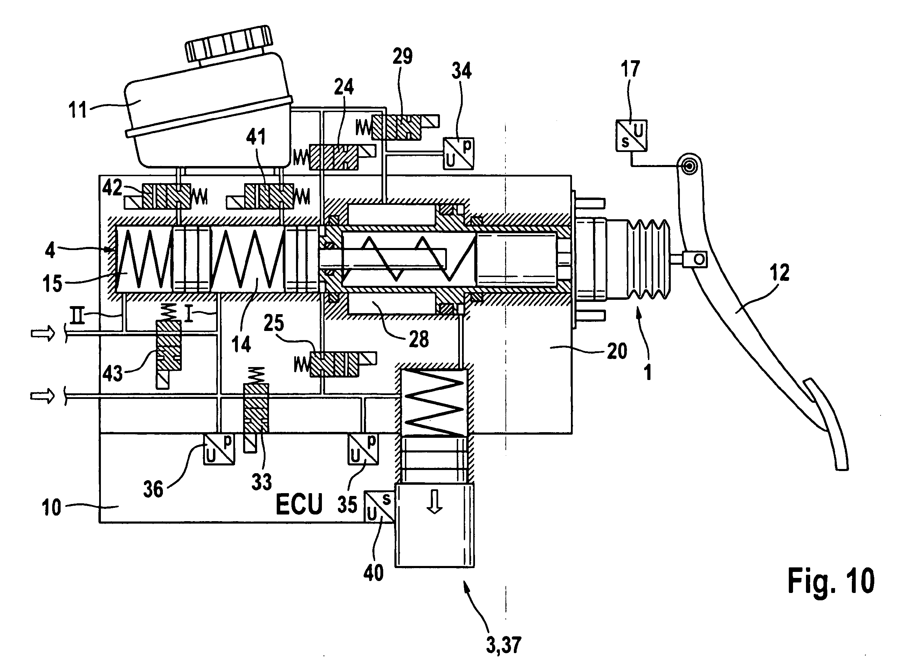

Die Art der Ansteuerung der erfindungsgemäßen Bremsanlage, die in Fig. 10 gezeigt ist, ist insbesondere bei der Verwendung selbstrückstellender Bremssättel sinnvoll, die kein oder geringes Restbremsmoment aufweisen. Dabei werden die im Zusammenhang mit Fig. 1 erwähnten, stromlos offenen (SO-) 2/2-Wegeventile 25, 41, 42 in ihre geschlossene Schaltstellung und das zwischen den Hauptbremszylinder-Druckräumen 14, 15 geschaltete, stromlos geschlossene (SG-) 2/2-Wegeventil 43 sowie das zwischen der elektrisch steuerbaren Druckbereitstellungseinrichtung 3 und dem Primärdruckraum 14 des Hauptbremszylinders 4 eingefügte, stromlos geschlossene (SG-) 2/2-Wegeventil 33 in ihre offene Schaltstellung umgeschaltet. Bei einer anschließenden Ansteuerung der Druckbereitstellungseinrichtung 3 in der der Betätigungsrichtung entgegen gesetzten Richtung wird aus den Radbremsen 5 - 8 (nicht dargestellt in Fig. 10) eine definierte Druckmittelvolumenmenge abgesaugt, so dass der entstehende Unterdruck ein Zurückziehen der Bremsbeläge und somit einen Freilauf der Bremsscheiben ermöglicht. Danach werden alle genannten 2/2-Wegeventile wieder in ihre unbetätigte Stellung geschaltet.

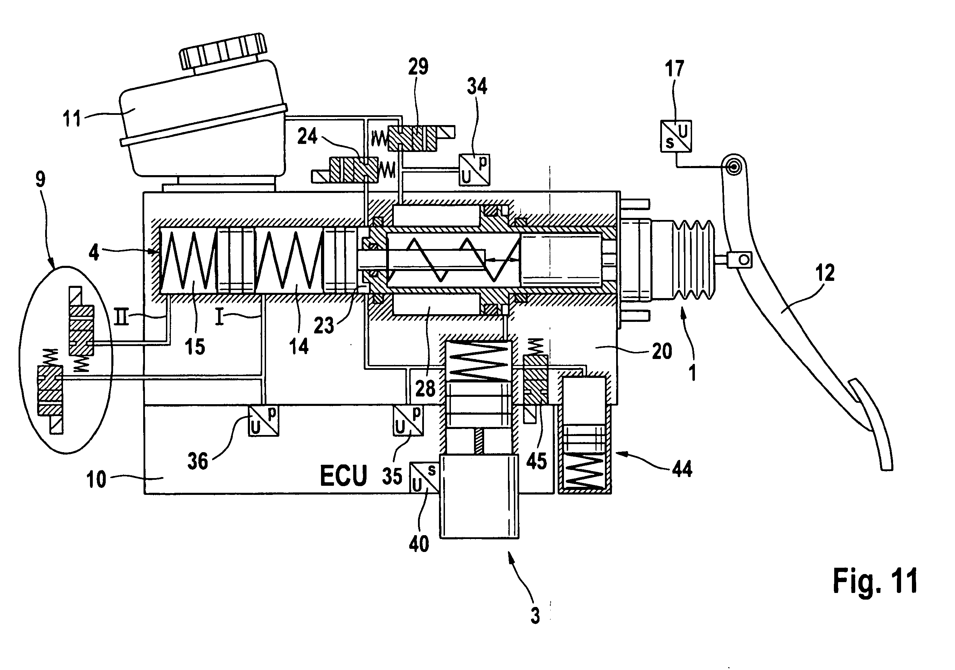

Fig. 11 zeigt schließlich eine Betriebsart, in der der Hochdruckspeicher 44 durch die Druckbereitstellungseinrichtung 3 aufgeladen wird. Dabei werden beide Bremskreise I, II durch im lediglich schematisch angedeuteten Raddruckmodulationsmodul 9 enthaltenen Trennventile und die erste sowie die zweite hydraulische Kammer 23, 28 abgesperrt und das Speicherladeventil 45 geöffnet, so dass das von der Druckbereitstellungseinrichtung 3 verdrängte Druckmittelvolumen den Hochdruckspeicher 44 auflädt. Der von der Druckbereitstellungseinrichtung 3 bereit gestellte Druck wird durch den Drucksensor 35 überwacht.

Im Rahmen der vorliegenden Erfindung sind selbstverständlich weitere Modifikationen denkbar. So kann beispielsweise zur Überprüfung der Funktion der Rückfallebene der Rückhaltekolben durch Ansteuerung der Druckbereitstellungseinrichtung 3 bewegt werden. Eine andere denkbare Maßnahme betrifft die Gestaltung des Abstands "d", der bei dieser Variante nahezu Null ist und bei einer rekuperativen Bremsung mittels des im Generatorbetrieb arbeitenden, ein Hybridfahrzeug antreibenden Elektromotors zur Unterdrückung eines hydraulischen Druckaufbaus das stromlos geschlossene (SG-) 2/2-Wegeventil 33 geöffnet wird, wobei das vom Fahrer über den axialen Fortsatz 21 verschobene Druckmittelvolumen des Primärdruckraumes 14 in die erste hydraulische Kammer 23 verdrängt wird.

## Patentansprüche

1. Bremsanlage für Kraftfahrzeuge, die in einer "Brake-by-Wire" Betriebsart sowohl vom Fahrzeugführer als auch unabhängig vom Fahrzeugführer ansteuerbar ist, vorzugsweise in der "Brake-by-Wire" Betriebsart betrieben wird und in einer Rückfallbetriebsart ohne Bremskraftverstärkung betrieben werden kann, in der nur der Betrieb durch den Fahrzeugführer möglich ist, mit
• einer Sensoreinrichtung (17) zum Erfassen eines Fahrerverzögerungswunsches,
• einem Eingangskraftelement (16), das über eine Druckstange (13) mit einem Bremspedal (12) gekoppelt ist,
• einem Hauptbremszylinder (4), der mindestens einen Hauptzylinderkolben (22,-) aufweist und an den Radbremskreise (I, II) angeschlossen sind,
• einem dem Hauptbremszylinder (4) zugeordneten Druckmittelvorratsbehälter (11), mit dem Druckräume (14, 15) des Hauptbremszylinders (4) verbindbar sind,
• einer elektrisch steuerbaren Druckbereitstellungseinrichtung (3),
• einer elektronischen Steuer- und Regeleinheit (10) zur Ansteuerung der elektrisch steuerbaren Druckbereitstellungseinrichtung (3) im Sinne einer Regelung des von ihr abgegebenen hydraulischen Druckes,
• einer dem Hauptbremszylinder (4) vorgeschalteten Pedalentkopplungseinheit (2) mit einem Rückhaltekolben (18), der einen axialen Fortsatz (21) des Hauptzylinderkolbens (22) hydraulisch abgedichtet aufnimmt, der in eine kraftübertragende Verbindung mit dem Hauptzylinderkolben (22) bringbar ist und dessen erste Ringfläche (26) mit dem Hauptzylinderkolben (22) eine erste hydraulische Kammer (23) begrenzt, die von dem von der elektrisch steuerbaren Druckbereitstellungseinrichtung (3) abgegebenen Druck beaufschlagbar ist,
• wobei eine Druckbeaufschlagung der Kammer (23) eine Kraftwirkung auf den Hauptzylinderkolben (22) in der Betätigungsrichtung und auf den Rückhaltekolben (18) entgegen der Betätigungsrichtung bewirkt, sowie
• mit einer Simulationseinrichtung mit mindestens einem elastischen Element (19), die in der Betriebsart "Brake-by-wire"' dem Fahrzeugführer ein angenehmes Pedalgefühl vermittelt und die zwischen dem Eingangskraftelement (16) und dem Rückhaltekolben (18) angeordnet ist,
**dadurch gekennzeichnet, dass**
der Rückhaltekolben (18) als ein Stufenkolben ausgebildet ist, dessen zweite Ringfläche (27) eine zweite, absperrbare hydraulische Kammer (28) begrenzt, wobei eine Druckwirkung in der zweiten Kammer (28) einer Kraft entspricht, die auf den Rückhaltekolben (18) entgegen der Betätigungsrichtung wirkt.

2. Bremsanlage nach Anspruch 1, **dadurch gekennzeichnet, dass** der Rückhaltekolben (18) eine dritte Ringfläche (30) aufweist, die eine dritte hydraulische Kammer (31) begrenzt, die von dem von der elektrisch steuerbaren Druckbereitstellungseinrichtung (3) abgegebenen Druck derart beaufschlagbar ist, dass eine Druckwirkung in der dritten Kammer (31) einer Kraft entspricht, die auf den Rückhaltekolben (18) in der Betätigungsrichtung wirkt.

3. Bremsanlage nach Anspruch 2, **dadurch gekennzeichnet, dass** das Verhältnis der dritten Ringfläche (30) zu der ersten Ringfläche (27) eine Druckübersetzung darstellt, die es ermöglicht, bei gegebenem Druck der elektrisch steuerbaren Druckbereitstellungseinrichtung (3) einen höheren Druck im Hauptbremszylinder (4) zu erzeugen.

4. Bremsanlage nach einem der Ansprüche 1 bis 3, **dadurch gekennzeichnet, dass** die elektrisch steuerbare Druckbereitstellungseinrichtung (3) mit einem der Hauptbremszylinder-Druckräume (14, 15) direkt verbindbar ist.

5. Bremsanlage nach einem der Ansprüche 1 bis 4, **dadurch gekennzeichnet, dass** ein Hochdruckspeicher (44) vorgesehen ist, der von der elektrisch steuerbaren Druckbereitstellungseinrichtung (3) aufladbar ist.

6. Bremsanlage nach einem der Ansprüche 1 bis 5, **dadurch gekennzeichnet, dass** in der Verbindung zwischen der ersten hydraulischen Kammer (23) und der elektrisch steuerbaren Druckbereitstellungseinrichtung (3) ein elektromagnetisch betätigbares, stromlos offenes (SO-) 2/2-Wegeventil (25) eingefügt ist.

7. Bremsanlage nach einem der Ansprüche 1 bis 6, **dadurch gekennzeichnet, dass** die erste hydraulische Kammer (23) über eine absperrbare hydraulische Verbindung (SO-Ventil 24) mit dem Druckmittelvorratsbehälter (11) in Verbindung steht.

8. Bremsanlage nach einem der Ansprüche 1 bis 7, **dadurch gekennzeichnet, dass** das Eingangskraftelement (16) in nicht betätigtem Zustand der Bremsanlage in einem vorbestimmten Abstand (d) vom Fortsatz (21) des Hauptzylinderkolbens (22) angeordnet ist.

9. Bremsanlage nach Anspruch 8, **dadurch gekennzeichnet, dass** der Abstand (d) derart bemessen ist, dass in einer Bremspedalstellung, die eine Verzögerung des Fahrzeuges darstellt, die durch eine Generator-Bremsung eines Hybridfahrzeuges möglich ist, keine kraftübertragende Berührung zwischen Eingangskraftelement (16) und Fortsatz (21) stattfindet.

10. Bremsanlage nach einem der vorhergehenden Ansprüche, **dadurch gekennzeichnet, dass** zwischen den Hauptbremszylinder-Druckräumen (14, 15) eine mittels eines elektromagnetisch betätigbaren, stromlos geschlossenen (SG-) 2/2-Wegeventils (43) freigebbare hydraulische Verbindung vorgesehen ist und dass die Hauptbremszylinder-Druckräume (14, 15) mit dem Druckmittelvorratsbehälter (11) mittels jeweils eines elektromagnetisch betätigbaren, stromlos geschlossenen (SG-) 2/2-Wegeventils (41, 42) verbindbar sind.

11. Bremsanlage nach einem der vorhergehenden Ansprüche, **dadurch gekennzeichnet, dass** Drucksensoren (34, 36, 35) zum Erfassen des in der zweiten Kammer (28), in einem der Druckräume (14) des Hauptbremszylinders (4) sowie von der elektrisch steuerbaren Druckbereitstellungseinrichtung (3) gelieferten Druckes vorgesehen sind.

12. Bremsanlage nach einem der vorhergehenden Ansprüche, **dadurch gekennzeichnet, dass** sämtliche elektromagnetisch betätigbaren 2/2-Wegeventile (24, 25, 29, 33, 41-43), die Drucksensoren (34, 35, 36), die Druckbereitstellungseinrichtung (3, 37) sowie ein die Rotorlage eines einen Bestandteil der Druckbereitstellungseinrichtung (3) bildenden Elektromotors (39) erfassender Rotorlagensensor (40) in einem hydraulischen Ventilblock integriert sind.

13. Verfahren zum Betrieb einer Bremsanlage nach einem der vorhergehenden Ansprüche 1 bis 12, **dadurch gekennzeichnet, dass** in der Betriebsart "Brake-by-wire" das in der Verbindung zwischen der ersten hydraulischen Kammer (23) und dem Druckmittelvorratsbehälter (11) eingefügte, stromlos offene (SO-) 2/2-Wegeventil (24) sowie das in der Verbindung zwischen der zweiten hydraulischen Kammer (28) und dem Druckmittelvorratsbehälter (11) eingefügte, stromlos offene (SO-) 2/2-Wegeventil bzw. Absperrventil (29) in ihre Schließstellung umgeschaltet werden und ein Druckaufbau in der ersten Kammer (23) durch Aktivieren der Druckbereitstellungseinrichtung (3, 37) entsprechend der von der Sensoreinrichtung (17) zum Erfassen des Fahrerverzögerungswunsches erfassten Betätigung des Bremspedals (12) stattfindet.

14. Verfahren zum Betrieb einer Bremsanlage nach Anspruch 13, **dadurch gekennzeichnet, dass** bei einer reinen Generator- bzw. einer Rekuperationsbremsung eines Hybridfahrzeuges das in der Verbindung zwischen der ersten hydraulischen Kammer (23) und dem Druckmittelvorratsbehälter (11) eingefügte, stromlos offene (SO-) 2/2-Wegeventil (24) sowie das in der Verbindung zwischen der zweiten hydraulischen Kammer (28) und dem Druckmittelvorratsbehälter (11) eingefügte, stromlos offene (SO-) 2/2-Wegeventil bzw. Absperrventil (29) in ihre Schließstellung umgeschaltet werden, und dass die vom Fahrzeugführer am Bremspedal (12) eingeleitete Betätigungskraft mittels des Eingangskraftelementes (16) auf die Simulatoreinrichtung (19) übertragen wird, wobei kein Aktivieren der Druckbereitstellungseinrichtung (3, 37) und somit kein hydraulischer Bremsdruckaufbau erfolgt.

15. Verfahren zum Betrieb einer Bremsanlage nach Anspruch 13 oder 14, **dadurch gekennzeichnet, dass** bei einem hochdynamischen Bremsvorgang das in der Verbindung zwischen der ersten hydraulischen Kammer (23) und dem Druckmittelvorratsbehälter (11) eingefügte, stromlos offene (SO-) 2/2-Wegeventil (24) sowie das in der Verbindung zwischen der zweiten hydraulischen Kammer (28) und dem Druckmittelvorratsbehälter (11) eingefügte, stromlos offene (SO-) 2/2-Wegeventil bzw. Absperrventil (29) in ihre Schließstellung umgeschaltet werden und ein Druckaufbau in der ersten Kammer (23) sowohl durch Aktivieren der Druckbereitstellungseinrichtung (3, 37) als auch mittels Zuschaltens des Hochdruckspeichers (44) durch Öffnen des Hochdruckspeicher-Ladeventils (45) entsprechend der von der Sensoreinrichtung (17) zum Erfassen des Fahrerverzögerungswunsches erfassten Betätigung des Bremspedals (12) stattfindet.

16. Verfahren zum Betrieb einer Bremsanlage nach einem der vorhergehenden Ansprüche 13 bis 15, **dadurch gekennzeichnet, dass** bei einem autonomen Druckaufbau, vorzugsweise für Assistenzsysteme, das in der Verbindung zwischen der ersten hydraulischen Kammer (23) und dem Druckmittelvorratsbehälter (11) eingefügte, stromlos offene (SO-) 2/2-Wegeventil (24) sowie das in der Verbindung zwischen der zweiten hydraulischen Kammer (28) und dem Druckmittelvorratsbehälter (11) eingefügte, stromlos offene (SO-) 2/2-Wegeventil bzw. Absperrventil (29) in ihre Schließstellung umgeschaltet werden und ein Druckaufbau in der ersten Kammer (23) durch Aktivieren der Druckbereitstellungseinrichtung (3, 37) entsprechend der Anforderung eines im Kraftfahrzeug vorhandenen Assistenzsystems stattfindet.

17. Verfahren zum Betrieb einer Bremsanlage nach einem der vorhergehenden Ansprüche 13 bis 16, **dadurch gekennzeichnet, dass** bei unzureichender elektrischer Versorgung das in der Verbindung zwischen der ersten hydraulischen Kammer (23) und dem Druckmittelvorratsbehälter (11) eingefügte, stromlos offene (SO-) 2/2-Wegeventil (24) sowie das in der Verbindung zwischen der zweiten hydraulischen Kammer (28) und dem Druckmittelvorratsbehälter (11) eingefügte, stromlos offene (SO-) 2/2-Wegeventil bzw. Absperrventil (29) in ihrer offenen Schaltstellung bleiben und dass ein Druckaufbau im Hauptbremszylinder (4) durch eine Übertragung der am Bremspedal (12) eingeleiteten Betätigungskraft auf den Hauptbremszylinderkolben (22) über das Eingangskraftelement (16), die Simulatoreinrichtung (19) sowie den Rückhaltekolben (18) erfolgt, wobei der Betätigungsweg am Bremspedal (12) durch die Summe eines ersten Weganteils, der der Druckmittel-Volumenaufnahme der dem Hauptbremszylinder (4) nachgeschalteten Bremssystemkomponenten entspricht, sowie eines zweiten Weganteils gebildet wird, der durch Zusammendrücken der Simulatoreinrichtung (19) entsteht.

18. Verfahren zum Betrieb einer Bremsanlage nach Anspruch 17, **dadurch gekennzeichnet, dass** die Übertragung der am Bremspedal (12) eingeleiteten Betätigungskraft auf den Hauptbremszylinderkolben (22) durch einen mechanischen Kontakt zwischen dem Eingangskraftelement (16) und dem Fortsatz (21) des Hauptbremszylinderkolbens (22) erfolgt.

19. Verfahren zum Betrieb einer Bremsanlage nach einem der vorhergehenden Ansprüche 13 bis 18, **dadurch gekennzeichnet, dass** die zwischen den Hauptbremszylinder-Druckräumen (14, 15) und dem Druckmittelvorratsbehälter (11) wirkenden, elektromagnetisch betätigbaren, stromlos offenen (SO-) 2/2-Wegeventile (41, 42) sowie das zwischen der elektrisch steuerbaren Druckbereitstellungseinrichtung (3) und der ersten Kammer (23) geschaltete, stromlos offene (SO-) 2/2-Wegeventil (25) in ihre Schließstellung umgeschaltet werden und das in der Verbindung zwischen den Hauptbremszylinder-Druckräumen (14, 15) eingefügte elektromagnetisch betätigbare, stromlos geschlossene (SG-) 2/2-Wegeventil (43) sowie das zwischen der Druckbereitstellungseinrichtung (3) und einem der Hauptbremszylinder-Druckräume (14) vorgesehene, stromlos geschlossene (SG-) 2/2-Wegeventil (33) in seine offene Schaltstellung geschaltet wird, wobei die Druckbereitstellungseinrichtung (3) derart angesteuert wird, dass ein Absaugen einer definierten Druckmittelmenge aus den an den Hauptbremszylinder (4) angeschlossenen Radbremsen (5 - 8) und somit ein Freilauf deren Bremsscheiben ermöglicht wird.

20. Verfahren zum Betrieb einer Bremsanlage nach einem der vorhergehenden Ansprüche 13 bis 19, **dadurch gekennzeichnet, dass** zum Laden des Hochdruckspeichers (44) sämtliche Verbindungen zwischen den Hauptbremszylinder-Druckräumen (14, 15) und den Radbremsen (5-8) abgesperrt werden, das in der Verbindung zwischen der ersten hydraulischen Kammer (23) und dem Druckmittelvorratsbehälter (11) eingefügte, stromlos offene (SO-) 2/2-Wegeventil (24) sowie das in der Verbindung zwischen der zweiten hydraulischen Kammer (28) und dem Druckmittelvorratsbehälter (11) eingefügte, stromlos offene (SO-) 2/2-Wegeventil bzw. Absperrventil (29) in ihre Schließstellung umgeschaltet werden und dass das zwischen der elektrisch steuerbaren Druckbereitstellungseinrichtung (3) und dem Hochdruckspeicher (44) vorgesehene Absperrventil (Speicherladeventil (45)) geöffnet wird und die Druckbereitstellungseinrichtung (3) im Sinne einer Druckerzeugung aktiviert wird.

## Claims

1. Brake system for motor vehicles which can be actuated in a brake-by-wire operating mode both by the vehicle driver and independently of the vehicle driver, is preferably operated in the brake-by-wire operating mode and can be operated in a fallback operating mode without brake boosting, in which fallback operating mode only operation by the vehicle driver is possible, having
• a sensor device (17) for sensing a driver deceleration request,
• an input force element (16) which is coupled to a brake pedal (12) via a pushrod (13),
• a master brake cylinder (4) which has at least one master cylinder piston (22,-) and is connected to the wheel brake circuits (I, II),
• a pressure medium reservoir vessel (11) which is assigned to the master brake cylinder (4) and to which pressure spaces (14, 15) of the master brake cylinder (4) can be connected,
• an electrically controllable pressure supply device (3),
• an electronic open-loop and closed-loop control unit (10) for actuating the electrically controllable pressure supply device (3) with the effect of performing closed-loop control of the hydraulic pressure which is output by it,
• a pedal decoupling unit (2) which is connected upstream of the master brake cylinder (4) and which has a restraining piston (18) which accommodates in a hydraulically sealed fashion an axial protrusion (21) of the master cylinder piston (22), which can be connected in a force-transmitting fashion to the master cylinder piston (22) and whose first annular face (26) bounds, with the master cylinder piston (22), a first hydraulic chamber (23) to which the pressure which is output by the electrically controllable pressure supply device (3) can be applied,
• wherein application of pressure to the chamber (22) brings about a force effect on the master cylinder piston (22) in the activation direction and on the restraining piston (18) counter to the activation direction, and
• having a simulation device with at least one elastic element (19), which simulation device provides the vehicle driver with a pleasant pedal sensation in the brake-by-wire operating mode and which is arranged between the input force element (16) and the restraining piston (18),
**characterized in that**
the restraining piston (18) is embodied as a stepped piston whose second annular face (27) bounds a second hydraulic chamber (28) which can be shut off, wherein a pressure effect in the second chamber (28) corresponds to a force which acts on the restraining piston (18) counter to the activation direction.

2. Brake system according to Claim 1, **characterized in that** the restraining piston (18) has a third annular face (30) which bounds a third hydraulic chamber (31) to which the pressure which is output by the electrically controllable pressure supply device (3) can be applied in such a way that a pressure effect in the third chamber (31) corresponds to a force which acts on the restraining piston (18) in the activation direction.

3. Brake system according to Claim 2, **characterized in that** the ratio of the third annular face (30) to the first annular face (27) constitutes a pressure transmission ratio which makes it possible to generate a higher pressure in the master brake cylinder (4) at a given pressure of the electrically controllable pressure supply device (3).

4. Brake system according to one of Claims 1 to 3, **characterized in that** the electrically controllable pressure supply device (3) can be directly connected to one of the master brake cylinder pressure spaces (14, 15).

5. Brake system according to one of Claims 1 to 4, **characterized in that** a high pressure accumulator (44) is provided which can be charged by the electrically controllable pressure supply device (3).

6. Brake system according to one of Claims 1 to 5, **characterized in that** a 2/2 way valve (25) which can be activated electromagnetically and is open in the currentless state (OC) is inserted into the connection between the first hydraulic chamber (23) and the electrically controllable pressure supply device (3).

7. Brake system according to one of Claims 1 to 6, **characterized in that** the first hydraulic chamber (23) is connected to the pressure medium reservoir vessel (11) via a hydraulic connection (OC valve 24) which can be shut off.

8. Brake system according to one of Claims 1 to 7, **characterized in that** in the nonactivated state of the brake system the input force element (16) is arranged at a predetermined distance (d) from the protrusion (21) of the master cylinder piston (22).

9. Brake system according to Claim 8, **characterized in that** the distance (d) is dimensioned in such a way that no force-transmitting contact between the input force element (16) and the protrusion (21) takes place in a brake pedal position which represents deceleration of the vehicle and which is possible by means of generator braking of a hybrid vehicle.

10. Brake system according to one of the preceding claims, **characterized in that** a hydraulic connection which can be opened by means of a 2/2 way valve (43) which can be activated electromagnetically and is closed when no current is flowing (CC) is provided between the master brake cylinder pressure spaces (14, 15), and **in that** the master brake cylinder pressure spaces (14, 15) can be connected to the pressure medium reservoir vessel (11) by means of, in each case, a 2/2 way valve (41, 42) which can be activated electromagnetically and is closed when no current is flowing (CC).

11. Brake system according to one of the preceding claims, **characterized in that** pressure sensors (34, 36, 35) for sensing the pressure in the second chamber (28) in one of the pressure spaces (14) of the master brake cylinder (4) as well as the pressure which is supplied by the electrically controllable pressure supply device (3) are provided.

12. Brake system according to one of the preceding claims, **characterized in that** all the 2/2 way valves (24, 25, 29, 33, 41-43) which can be activated electromagnetically, the pressure sensors (34, 35, 36), the pressure supply device (3, 37) and a rotor position sensor (40), which senses the rotor position of an electric motor (39) which forms a component of the pressure supply device (3), are integrated in a hydraulic valve block.

13. Method for operating a brake system according to one of the preceding Claims 1 to 12, **characterized in that** in the brake-by-wire operating mode the 2/2 way valve (24) which is open when no current is flowing (OC) and which is inserted into the connection between the first hydraulic chamber (23) and the pressure medium reservoir vessel (11) and the 2/2 way valve or check valve (29) which is open when no current is flowing (OC) and is inserted into the connection between the second hydraulic chamber (28) and the pressure medium reservoir vessel (11) are switched over into their closed position and a buildup of pressure in the first chamber (23) takes place by activating the pressure supply device (3, 37) in accordance with the activation of the brake pedal (12) which is sensed by the sensor device (17) for sensing the driver deceleration request.

14. Method for operating a brake system according to Claim 13, **characterized in that** in the case of pure generator braking or regenerative braking of a hybrid vehicle the 2/2 way valve (24) which is open when no current is flowing (OC) and is inserted into the connection between the first hydraulic chamber (23) and the pressure medium reservoir vessel (11) and the 2/2 way valve or check valve (29) which is open when no current is flowing (OC) and is inserted into the connection between the second hydraulic chamber (28) and the pressure medium reservoir vessel (11) are switched over into their closed position, and **in that** the activation force which is applied to the brake pedal (12) by the vehicle driver is transmitted to the simulator device (19) by means of the input force element (16), wherein the pressure supply device (3, 37) is not activated and therefore no hydraulic brake buildup of pressure occurs.

15. Method for operating a brake system according to Claim 13 or 14, **characterized in that** in the case of a highly dynamic braking process the 2/2 way valve (24) which is open when no current is flowing (OC) and is inserted into the connection between the first hydraulic chamber (23) and the pressure medium reservoir vessel (11), and the 2/2 way valve or check valve (29) which is open when no current is flowing (OC) and is inserted into the connection between the second hydraulic chamber (28) and the pressure medium reservoir vessel (11) are switched over into their closed position and a buildup of pressure in the first chamber (22) takes place both as a result of activation of the pressure supply device (3, 37) and by connecting the high pressure accumulator (44) into the circuit by opening the high pressure accumulator charging valve (45) in accordance with the activation of the brake pedal (12) which is sensed by the sensor device (17) for sensing the driver deceleration request.

16. Method for operating a brake system according to one of the preceding Claims 13 to 15, **characterized in that** in the case of an autonomous buildup in pressure, preferably for assistance systems, the 2/2 way valve (24) which is open when no current is flowing (OC) and which is inserted into the connection between the first hydraulic chamber (23) and the pressure medium reservoir vessel (11), and the 2/2 way valve or check valve (29) which is open when no current is flowing (OC) and is inserted into the connection between the second hydraulic chamber (28) and the pressure medium reservoir vessel (11) are switched over into their closed position and a buildup of pressure in the first chamber (23) takes place in accordance with the request of an assistance system present in the motor vehicle by activation of the pressure supply device (3, 37).

17. Method for operating a brake system according to one of the preceding Claims 13 to 16, **characterized in that** in the case of an insufficient electrical supply the 2/2 way valve (24) which is open when no current is flowing (OC) and is inserted into the connection between the first hydraulic chamber (23) and the pressure medium reservoir vessel (11), and the 2/2 way valve or check valve (29) which is open when no current is flowing (OC) and is inserted into the connection between the second hydraulic chamber (28) and the pressure medium reservoir vessel (11) remain in their open switched position, and **in that** a buildup of pressure in the master brake cylinder (4) occurs as a result of transmission of the activation force which is applied to the brake pedal (12) to the master brake cylinder piston (22) via the input force element (16), the simulator device (19) and the restraining piston (18), wherein the activation travel at the brake pedal (12) is formed by the sum of a first travel component, which corresponds to the pressure medium volume takeup by the brake system components which are connected downstream of the master brake cylinder (4), and of a second travel component, which is produced as a result of compression of the simulator device (19).

18. Method for operating a brake system according to Claim 17, **characterized in that** the transmission of the activating force, which is applied to the brake pedal (12), to the master brake cylinder piston (22) occurs by means of mechanical contact between the input force element (16) and the protrusion (21) of the master brake cylinder piston (22).

19. Method for operating a brake system according to one of the preceding Claims 13 to 18, **characterized in that** the 2/2 way valves (41, 42) which are open when no current is flowing (OC), which can be activated electromagnetically and which act between the master brake cylinder pressure spaces (14, 15) and the pressure medium reservoir vessel (11), and the 2/2 way valve (25) which is open when no current is flowing (OC) and is connected between the electrically controllable pressure supply device (3) and the first chamber (23) are switched over into their closed position and the 2/2 way valve (43) which is closed when no current is flowing (CC), can be activated electromechanically and is inserted into the connection between the master brake cylinder pressure spaces (14, 15), and the 2/2 way valve (33) which is closed when no current is flowing (CC) and is provided between the pressure supply device (3) and one of the master brake cylinder pressure spaces (14) is switched to its open switched position, wherein the pressure supply device (3) is activated in such a way that extraction of a defined quantity of pressure medium from the wheel brakes (5-8) connected to the master brake cylinder (4) and freewheeling of the brake disks of said wheel brakes (5-8) is made possible.

20. Method for operating a brake system according to one of the preceding Claims 13 to 19, **characterized in that**, in order to charge the high pressure accumulator (44), all the connections between the master brake cylinder pressure spaces (14, 15) and the wheel brakes (5-8) are shut off, the 2/2 way valve (24) which is open when no current is flowing (OC) and is inserted into the connection between the first hydraulic chamber (23) and the pressure medium reservoir vessel (11), and the 2/2 way valve or check valve (29) which is open when no current is flowing (OC) and is inserted into the connection between the second hydraulic chamber (28) and the pressure medium reservoir vessel (11) are switched over into their closed position, and **in that** the check valve (accumulator charging valve (45)) which is provided between the electrically controllable pressure supply device (3) and the high pressure accumulator (44) is opened and the pressure supply device (3) is activated with the effect of generating pressure.

## Revendications

1. Installation de freinage pour véhicules automobiles, apte à être commandée en mode "freinage par fil" aussi bien par le conducteur du véhicule qu'indépendamment du conducteur du véhicule, utilisée de préférence en mode "freinage par fil" et pouvant être utilisée sans amplification de la force de freinage en mode anti-recul dans lequel seul le fonctionnement sous la commande du conducteur du véhicule est possible, et présentant
- un dispositif de détection (17) qui détecte un souhait de ralentissement du conducteur,
- un élément (16) d'entrée de force couplé à une pédale de frein (12) par une tringle de poussée (13),
- un cylindre principal de freinage (4) qui présente un ou plusieurs pistons (22, -) de cylindre principal raccordés aux circuits (I), (II) des freins de roue,
- un réservoir (11) de réserve de fluide sous pression associé au cylindre principal de freinage (4) et auquel des espaces sous pression (14, 15) du cylindre principal de freinage (4) peuvent être raccordés,
- un dispositif (3) d'établissement de pression commandé électriquement,
- une unité électronique de commande et de régulation (10) qui commande le dispositif (3) d'établissement de pression commandé électriquement dans le sens d'une régulation de la pression hydraulique qu'il délivre,
- une unité (2) de découplage de pédale raccordée en amont du cylindre principal de freinage (4) et présentant un piston de retenue (18) qui reprend de manière hydrauliquement étanche un prolongement axial (21) du piston (22) du cylindre principal qui peut être relié au piston (22) du cylindre principal en vue d'une transmission de force et dont la première surface annulaire (26) délimite avec le piston (22) du cylindre principal une première chambre hydraulique (23) sur laquelle la pression délivrée par le dispositif (3) d'établissement de pression commandé électriquement peut être délivrée,
- l'application d'une pression sur la chambre (23) ayant pour effet l'application sur le piston (22) du cylindre principal d'une force orientée dans la direction d'actionnement et sur le piston de retenue (18) d'une force orientée dans la direction opposée à la direction d'actionnement,
- et un dispositif de simulation qui présente au moins un élément élastique (19) qui, en mode de fonctionnement "freinage par fil", transmet au conducteur du véhicule une sensation de pédale agréable et qui est disposé entre l'élément (16) d'entrée de force et le piston de retenue (18),
**caractérisée en ce que**
le piston de retenue (18) est configuré comme piston étagé dont la deuxième surface annulaire (27) délimite une deuxième chambre hydraulique (28) apte à être fermée, la pression dans la deuxième chambre (28) correspondant à une force qui agit sur le piston de retenue (18) dans le sens opposé à la direction d'actionnement.

2. Installation de freinage selon la revendication 1, **caractérisée en ce que** le piston de retenue (18) présente une troisième surface annulaire (30) qui délimite une troisième chambre hydraulique (31) dans laquelle la pression délivrée par le dispositif (3) d'établissement de pression commandé électriquement peut être appliquée de telle sorte que l'action de la pression dans la troisième chambre (31) corresponde à une force qui agit dans la direction d'actionnement sur le piston de retenue (18).

3. Installation de freinage selon la revendication 2, **caractérisée en ce que** le rapport entre la troisième surface annulaire (30) et la première surface annulaire (27) représente une conversion de pression qui permet d'obtenir, pour une pression donnée du dispositif (3) d'établissement de pression commandé électriquement, une pression plus élevée dans le cylindre principal de freinage (4).

4. Installation de freinage selon l'une des revendications 1 à 3, **caractérisée en ce que** le dispositif (3) d'établissement d'une pression commandé électriquement peut être relié directement à l'une des chambres (14, 15) sous pression du cylindre principal de freinage.

5. Installation de freinage selon l'une des revendications 1 à 4, **caractérisée en ce qu'**une réserve (44) à haute pression est prévue et peut être chargée par le dispositif (3) d'établissement de pression commandé électriquement.

6. Installation de freinage selon l'une des revendications 1 à 5, **caractérisée en ce qu'**une soupape à 2/2 voies (25), ouverte en l'absence de courant (SO-) et actionnée électromagnétiquement est insérée entre la première chambre hydraulique (23) et le dispositif (3) d'établissement de pression commandé électriquement.

7. Installation de freinage selon l'une des revendications 1 à 6, **caractérisée en ce que** la première chambre hydraulique (23) communique avec le réservoir (11) de réserve de fluide sous pression par l'intermédiaire d'une liaison hydraulique refermable (soupape SO- 24).

8. Installation de freinage selon l'une des revendications 1 à 7, **caractérisée en ce que** l'élément (16) d'entrée de force est disposé à une distance prédéfinie (d) du prolongement (21) du piston (22) du cylindre principal lorsque l'installation de freinage n'est pas à l'état actionné.

9. Installation de freinage selon la revendication 8, **caractérisée en ce que** la distance (d) est sélectionnée de telle sorte que dans une position de la pédale de frein qui représente un ralentissement du véhicule que permet le freinage par la génératrice d'un véhicule hybride, aucun contact de transfert de force n'a lieu entre l'élément (16) d'entrée de force et le prolongement (21).

10. Installation de freinage selon l'une des revendications précédentes, **caractérisée en ce qu'**entre les espaces sous pression (14, 15) du cylindre principal de freinage est prévue une liaison hydraulique qui peut être libérée au moyen d'une vanne à 2/2 voies (43) fermée en l'absence de courant (SG-) et actionnée électromagnétiquement et **en ce que** les espaces sous pression (14, 15) du cylindre principal de freinage peuvent être reliés au réservoir (11) de réserve de fluide sous pression au moyen de soupapes à 2/2 voies (41, 42) respectives fermées en l'absence de courant (SG-) et actionnées électromagnétiquement.

11. Installation de freinage selon l'une des revendications précédentes, **caractérisée en ce que** des détecteurs de pression (34, 36, 35) sont prévus pour détecter la pression délivrée dans la deuxième chambre (28), dans un des espaces sous pression (14) du cylindre principal de freinage (4) ainsi que par le dispositif (3) d'établissement de pression commandé électriquement.

12. Installation de freinage selon l'une des revendications précédentes, **caractérisée en ce que** toutes les vannes à 2/2 voies (24, 25, 29, 33, 41-43) actionnées électromagnétiquement, les détecteurs de pression (34, 35, 36), le dispositif (3, 37) d'établissement de pression ainsi qu'un détecteur (40) de position de rotor qui détecte la position du rotor d'un moteur électrique (39) qui forme un composant du dispositif (3) d'établissement de pression sont intégrés dans un bloc hydraulique de soupapes.

13. Procédé d'utilisation d'une installation de freinage selon l'une des revendications 1 à 12 qui précèdent, **caractérisé en ce qu'**en mode "freinage par fil", la soupape à 2/2 voies (24) ouverte en l'absence de courant (SO-) est intercalée dans la liaison entre la première chambre hydraulique (23) et le réservoir (11) de réserve de fluide sous pression ainsi que la vanne à 2/2 voies ou vanne de blocage (29), ouverte en l'absence de courant (SO-) et intercalée entre la deuxième chambre hydraulique (28) et le réservoir (11) de réserve de fluide sous pression, sont commutées dans leur position de fermeture et **en ce qu'**une pression est établie dans la première chambre (23) par activation du dispositif (3, 37) d'établissement de pression en correspondance à l'actionnement de la pédale de frein (12) détecté par le dispositif de détection (17) en vue de détecter le souhait de ralentissement du conducteur.

14. Procédé d'utilisation d'une installation de freinage selon la revendication 13, **caractérisé en ce que** dans le cas d'un freinage par le générateur ou d'un freinage de récupération d'un véhicule hybride, la soupape à 2/2 voies (24), ouverte en l'absence du courant (SO-) et intercalée dans la liaison entre la première chambre hydraulique (23) et le réservoir (11) de réserve de fluide sous pression ainsi que la vanne à 2/2 voies ou vanne de blocage (29), ouverte en l'absence de courant (SO-) et intercalée dans la liaison entre la deuxième chambre hydraulique (28) et le réservoir (11) de réserve de fluide sous pression sont commutées dans leur position de fermeture et **en ce que** la force d'actionnement appliquée par le conducteur du véhicule sur la pédale de frein (12) est transmise au moyen de l'élément (16) d'entrée de force au dispositif de simulation (19), aucune activation du dispositif (3, 37) d'établissement de pression et donc aucun établissement d'une pression hydraulique de freinage n'ayant lieu.

15. Procédé d'utilisation d'une installation de freinage selon les revendications 13 ou 14, **caractérisé en ce que** lors d'une opération de freinage à haute dynamique, la vanne à 2/2 voies (24), ouverte en l'absence de courant (SO-) et intercalée dans la liaison entre la première chambre hydraulique (23) et le réservoir (11) de réserve de fluide sous pression ainsi que la vanne à 2/2 voies ou vanne de blocage (29), ouverte en l'absence de courant (SO-) et intercalée dans la liaison entre la deuxième chambre hydraulique (28) et le réservoir (11) de fluide sous pression sont commutées dans leur position de fermeture et **en ce qu'**une pression est établie dans la première chambre (23) à la fois par activation du dispositif (3, 37) d'établissement de pression et au moyen du branchement de la réserve (44) sous haute pression par ouverture de la vanne (45) de charge de la réserve sous haute pression en correspondance à l'actionnement de la pédale de frein (12) détectée par le dispositif de détection (17) pour détecter le souhait de ralentissement du conducteur.

16. Procédé d'utilisation d'une installation de freinage selon les revendications 13 à 15, **caractérisé en ce que** lors d'un établissement autonome de pression, de préférence pour des systèmes d'assistance, la vanne à 2/2 voies (24) ouverte en l'absence de courant (SO-) et intercalée dans la liaison entre la première chambre hydraulique (23) et le réservoir (11) de réserve de fluide sous pression ainsi que la vanne à 2/2 voies ou vanne de blocage (29), ouverte en l'absence de courant (SO-) et insérée dans la liaison entre la deuxième chambre hydraulique (28) et le réservoir (11) de réserve de fluide sous pression sont commutées dans leur position de fermeture et **en ce qu'**une pression est établie dans la première chambre (23) par activation du dispositif (3, 37) d'établissement de pression en correspondance à la demande d'un système d'assistance présent dans le véhicule automobile.

17. Procédé d'utilisation d'une installation de freinage selon les revendications 13 à 16, **caractérisé en ce que** lorsque l'alimentation électrique est insuffisante, la vanne à 2/2 voies (24) ouverte en l'absence de courant (SO-) et intercalée dans la liaison entre la première chambre hydraulique (23) et le réservoir (11) de réserve de fluide sous pression ainsi que la vanne à 2/2 voies ou vanne de blocage (29), ouverte en l'absence de courant (SO-) et intercalée dans la liaison entre la deuxième chambre hydraulique (28) et le réservoir (11) de réserve de fluide sous pression restent dans leur position de commutation ouverte et **en ce qu'**une pression est établie dans le cylindre principal de freinage (4) par le transfert sur le piston (22) du cylindre principal de freinage et par l'intermédiaire de l'élément (16) d'entrée de force, du dispositif de simulation (19) ainsi que du piston de retenue (18), d'une force d'actionnement appliquée sur la pédale de frein (12), la course d'actionnement de la pédale de frein (12) étant formée par la somme d'une première partie de course qui correspond à l'augmentation de volume de fluide sous pression des composants du système de freinage raccordés en aval du cylindre principal de freinage (4) et d'une deuxième partie de course qui résulte de la compression du dispositif de simulation (19).

18. Procédé d'utilisation d'une installation de freinage selon la revendication 17, **caractérisé en ce que** le transfert de la force d'actionnement appliquée sur la pédale de frein (12) sur le piston (22) du cylindre principal de freinage a lieu par l'intermédiaire d'un contact mécanique entre l'élément (16) d'entrée de force et le prolongement (21) du piston (22) du cylindre principal de freinage.

19. Procédé d'utilisation d'une installation de freinage selon les revendications 13 à 18, **caractérisé en ce que** les vannes à 2/2 voies (41, 42), ouvertes en l'absence de courant (SO-), actionnées électromagnétiquement et agissant sur les espaces sous pression (14, 15) du cylindre principal de freinage et le réservoir (11) de réserve de fluide sous pression ainsi que la vanne à 2/2 voies (25) commandée électriquement, ouverte en l'absence de courant (SO-) et raccordée entre le dispositif (3) d'établissement de pression et la première chambre (23) sont basculés dans leur position de fermeture et **en ce que** la vanne à 2/2 voies (43), fermée en l'absence de courant (SG-), actionnée électromagnétiquement et intercalée dans la liaison entre les espaces sous pression (14, 15) du cylindre principal de freinage ainsi que la vanne à 2/2 voies (33), fermée en l'absence de courant (SG-) et prévue entre le dispositif (3) d'établissement de pression et un des espaces sous pression (14) du cylindre principal de freinage sont commutées dans leur position de commutation ouverte, le dispositif (3) d'établissement de pression étant commandé de manière à permettre l'aspiration d'une quantité définie de fluide sous pression hors des freins de roues (5-8) raccordés au cylindre principal de freinage (4) ainsi qu'une rotation libre de leur disque de frein.

20. Procédé d'utilisation d'une installation de freinage selon les revendications 13 à 19, **caractérisé en ce que** pour charger la réserve (44) sous haute pression, toutes les liaisons entre les espaces sous pression (14, 15) du cylindre principal de freinage et les freins de roues (5-8) sont bloquées, **en ce que** la vanne à 2/2 voies (24), ouverte en l'absence de courant (SO-) et intercalée dans la liaison entre la première chambre hydraulique (23) et le réservoir (11) de réserve sous pression ainsi que la vanne à 2/2 voies ou vanne de blocage (29), ouverte en l'absence de courant (SO-) et intercalée dans la liaison entre la deuxième chambre hydraulique (28) et le réservoir (11) de réserve de fluide sous pression sont commutées dans leur position de fermeture et **en ce que** la vanne de blocage (vanne (45) de chargement de la réserve) prévue entre le dispositif (3) d'établissement de pression commandé électriquement et la réserve (44) sous haute pression est ouverte et le dispositif (3) d'établissement de pression est activé dans le sens de l'établissement d'une pression.
